(19) Europäisches Patentamt
European Patent Office
Office européen des brevets

(11) EP 4 309 770 A1

(12) **EUROPEAN PATENT APPLICATION**
published in accordance with Art. 153(4) EPC

(43) Date of publication:
**24.01.2024 Bulletin 2024/04**

(21) Application number: **22771061.3**

(22) Date of filing: **25.02.2022**

(51) International Patent Classification (IPC):
***B01D 67/00*** (2006.01) ***B01D 69/10*** (2006.01)
***B01D 69/12*** (2006.01) ***B01D 71/34*** (2006.01)
***B01D 71/64*** (2006.01) ***B01D 71/68*** (2006.01)
***B32B 37/02*** (2006.01)

(52) Cooperative Patent Classification (CPC):
**B01D 67/00; B01D 69/10; B01D 69/12; B01D 71/34; B01D 71/64; B01D 71/68; B32B 37/02**

(86) International application number:
**PCT/JP2022/008061**

(87) International publication number:
**WO 2022/196306 (22.09.2022 Gazette 2022/38)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **17.03.2021 JP 2021043747**

(71) Applicant: **NITTO DENKO CORPORATION**
**Ibaraki-shi**
**Osaka 567-8680 (JP)**

(72) Inventors:
- **TANI, Kensuke**
  **Ibaraki-shi, Osaka 567-8680 (JP)**
- **IWASAKI, Daiki**
  **Ibaraki-shi, Osaka 567-8680 (JP)**
- **SHIMIZU, Hisae**
  **Ibaraki-shi, Osaka 567-8680 (JP)**
- **SAYAMA, Shunsuke**
  **Ibaraki-shi, Osaka 567-8680 (JP)**

(74) Representative: **Hoffmann Eitle**
**Patent- und Rechtsanwälte PartmbB**
**Arabellastraße 30**
**81925 München (DE)**

(54) **MANUFACTURING METHOD FOR SEPARATION FILM AND SEPARATION FILM**

(57) The present invention provides a method for manufacturing a separation membrane suitable for transferring a separation functional layer and an intermediate layer from a release liner to a porous support member. The manufacturing method of the present invention is a method for manufacturing a separation membrane 10 including a separation functional layer 1, a porous support member 3, and an intermediate layer 2. The manufacturing method includes: forming the intermediate layer 2 on a first laminate 15 having a release liner 5 and the separation functional layer 1; bonding the intermediate layer 2 of a second laminate 16 having the release liner 5, the separation functional layer 1, and the intermediate layer 2 in this order to the porous support member 3 and thereby forming a third laminate 17; and removing the release liner 5 from the third laminate 17. In the manufacturing method, the intermediate layer 2 is formed in such a manner that a ratio R of an adhesive strength A2 (N/50 mm) between the intermediate layer 2 and the porous support member 3 with respect to an adhesive strength A1 (N/50 mm) between the release liner 5 and the separation functional layer 1 is 3.1 or more.

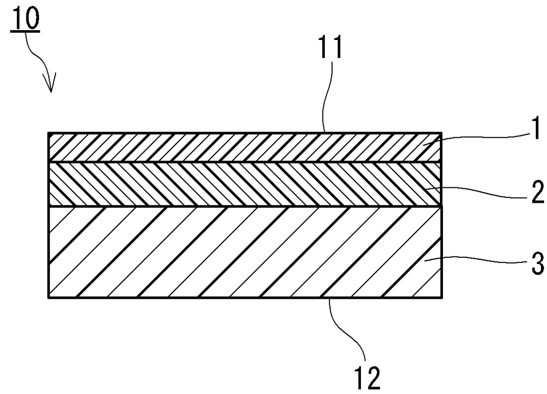


FIG.1

EP 4 309 770 A1

## Description

### TECHNICAL FIELD

The present invention relates to a method for manufacturing a separation membrane and a separation membrane.

### BACKGROUND ART

A membrane separation method has been developed as a method for separating an acid gas such as carbon dioxide from a gas mixture containing the acid gas. The membrane separation method allows an efficient separation of an acid gas with a suppressed operation cost, compared with an absorption method according to which an acid gas contained in a gas mixture is absorbed by an absorbent to be separated.

Separation membranes used in the membrane separation method include a composite membrane in which a separation functional layer is formed on a porous support member. Examples of a material of the separation functional layer include a resin such as a polyimide resin or a polyether block amide resin. For example, Patent Literatures 1 and 2 each disclose a separation membrane including a polyimide resin.

In the field of separation membranes, an intermediate layer may be disposed between the separation functional layer and the porous support member. The intermediate layer makes it possible to form easily a separation functional layer with a small thickness.

### CITATION LIST

#### Patent Literature

Patent Literature 1: JP 2014-184424 A
Patent Literature 2: JP 2014-24004 A

### SUMMARY OF INVENTION

#### Technical Problem

The separation functional layer can be produced by, for example, applying a coating liquid containing a material of a separation functional layer onto a laminate of an intermediate layer and a porous support member and drying the obtained coating film. However, the intermediate layer brought into contact with the coating liquid tends to be dissolved depending on a solvent contained in the coating liquid. When the intermediate layer is dissolved, the coating liquid also comes in contact with the porous support member and further dissolves the porous support member in some cases. When the intermediate layer and the porous support member are dissolved, a permeation rate of a permeated fluid from a separation membrane tends to decrease significantly.

As a method for producing a separation membrane without applying a coating liquid onto the intermediate layer, a transfer method can be considered. The transfer method is performed by the following method, for example. First, a coating liquid containing a material of a separation functional layer is applied onto a release liner, and the obtained coating film is dried to produce a separation functional layer. An intermediate layer is formed on the separation functional layer. The separation functional layer and the intermediate layer are transferred from the release liner to a porous support member.

According to the studies by the present inventors, conventional techniques tend to make it difficult to peel off the release liner from the separation functional layer and thus make it difficult to transfer the separation functional layer and the intermediate layer from the release liner to the porous support member.

Therefore, the present invention provides a method for manufacturing a separation membrane suitable for transferring a separation functional layer and an intermediate layer from a release liner to a porous support member.

#### Solution to Problem

The present invention provides a method for manufacturing a separation membrane including a separation functional layer, a porous support member supporting the separation functional layer, and an intermediate layer disposed between the separation functional layer and the porous support member, the method including:

applying a coating liquid containing a material of the intermediate layer onto a first laminate having a release liner and the separation functional layer, then drying the coating liquid, and thereby forming the intermediate layer;
bonding the intermediate layer of a second laminate having the release liner, the separation functional layer, and the intermediate layer in this order to the porous support member and thereby forming a third laminate; and
removing the release liner from the third laminate, wherein
the intermediate layer is formed in such a manner that a ratio R of an adhesive strength A2 (N/50 mm) between the intermediate layer and the porous support member with respect to an adhesive strength A1 (N/50 mm) between the release liner and the separation functional layer is 3.1 or more.

The present invention further provides a separation membrane including:

a separation functional layer;
a porous support member supporting the separation functional layer; and
an intermediate layer disposed between the separation functional layer and the porous support member, wherein
the intermediate layer has a storage elastic modulus of $1.0 \times 10^5$ Pa or less at 25°C.

Advantageous Effects of Invention

The present invention can provide a method for manufacturing a separation membrane suitable for transferring a separation functional layer and an intermediate layer from a release liner to a porous support member.

BRIEF DESCRIPTION OF DRAWINGS

FIG. 1 is a cross-sectional view illustrating schematically a separation membrane manufactured by a manufacturing method according to one embodiment of the present invention.
FIG. 2A is a diagram for explaining the manufacturing method according to one embodiment of the present invention.
FIG. 2B is a diagram for explaining the manufacturing method according to one embodiment of the present invention.
FIG. 2C is a diagram for explaining the manufacturing method according to one embodiment of the present invention.
FIG. 3 is a schematic cross-sectional view of a membrane separation device including the separation membrane of the present invention.
FIG. 4 is a perspective view schematically showing a modification of the membrane separation device including the separation membrane of the present invention.
FIG. 5 is a graph showing a relationship between an adhesive strength A1 and an adhesive strength A2 in Examples 1 to 22.

DESCRIPTION OF EMBODIMENTS

The present invention will be described in detail below. The following description is not intended to limit the present invention to a specific embodiment.

<Method for manufacturing separation membrane>

As shown in FIG. 1, a manufacturing method of the present embodiment is a method for manufacturing a separation membrane 10 including a separation functional layer 1, a porous support member 3 supporting the separation functional layer 1, and an intermediate layer 2 disposed between the separation functional layer 1 and the porous support member 3. In the separation membrane 10, the intermediate layer 2 is, for example, in direct contact with each of the separation functional layer 1 and the porous support member 3.
FIG. 2A to FIG. 2C are diagrams for explaining the manufacturing method of the present embodiment. As shown in FIG. 2A to FIG. 2C, the manufacturing method of the present embodiment includes: applying a coating liquid containing a material of the intermediate layer 2 onto a first laminate 15 having a release liner (separator) 5 and the separation functional layer 1, then drying the coating liquid, and thereby forming the intermediate layer 2; bonding the intermediate layer 2 of a second laminate 16 having the release liner 5, the separation functional layer 1, and the intermediate layer 2 in this order to the porous support member 3 and thereby forming a third laminate 17; and removing the release liner 5 from the third laminate 17. In the manufacturing method of the present embodiment, the intermediate layer 2 is formed in such a manner that a ratio R of an adhesive strength A2 (N/50 mm) between the intermediate layer 2 and the porous support member 3 with respect to an adhesive strength A1 (N/50 mm) between the release liner 5 and

the separation functional layer 1 is 3.1 or more.

The ratio R is preferably 5.0 or more, more preferably 6.0 or more, still more preferably 7.0 or more, and particularly preferably 8.0 or more, and may be 9.0 or more or 10.0 or more. A higher ratio R tends to make it possible to remove the release liner 5 from the third laminate 17 more easily. The upper limit of the ratio R is, for example, but not particularly limited to, 150, and may be 50 or 30.

The adhesive strength A1 between the release liner 5 and the separation functional layer 1 can be measured by the following method. First, a laminate composed of the release liner 5 and the separation functional layer 1 is produced. The laminate can be produced by a later-described method for manufacturing the first laminate 15 (FIG. 2A). The laminate is cut into a piece that is 50 mm in width and 100 in length to obtain a specimen. Next, a surface of the separation functional layer 1 included in the specimen is entirely laid on a polyethylene terephthalate film via a double-sided adhesive tape (No. 500 available from Nitto Denko Corporation), and a 2 kg roller is rolled thereon back and forth once so that they are press-bonded. Next, the separation functional layer 1 is peeled off, together with the film, from the release liner 5 at a peel angle of 180° and a peel rate of 100 mm/min by using a commercially available tensile testing machine. The peel strength at that time can be considered as the adhesive strength A1 between the release liner 5 and the separation functional layer 1. The above-mentioned measurement is made under a 23°C atmosphere.

The adhesive strength A1 is, for example, 0.01 N/50 mm or more, preferably 0.1 N/50 mm or more, and more preferably 0.2 N/50 mm or more, and may be 0.3 N/50 mm or more. From the viewpoint that the release liner 5 can be removed from the third laminate 17 easily, the adhesive strength A1 is, for example, 2.0 N/50 mm or less, preferably 1.8 N/50 mm or less, more preferably 1.5 N/50 mm or less, and still more preferably 1.2 N/50 mm or less, and may be 1.0 N/50 mm or less, 0.8 N/50 mm or less, or 0.6 N/50 mm or less. The adhesive strength A1 is preferably 0.2 to 1.8 N/50 mm. The adhesive strength A1 tends to correlate with a coating property that a coating liquid containing a material of the separation functional layer 1 has with respect to the release liner 5. For example, in the case where the coating liquid has an excellent coating property with respect to the release liner 5, the adhesive strength A1 tends to be high.

The adhesive strength A2 between the intermediate layer 2 and the porous support member 3 can be measured by the following method. First, the intermediate layer 2 is produced on a sheet for evaluation (DIAFOIL T100-50 available from Mitsubishi Plastics, Inc., thickness: 50 μm). The intermediate layer 2 can be produced by a later-described method. Next, a surface of the intermediate layer 2 is entirely laid on the porous support member 3, and a 2 kg roller is rolled thereon back and forth once so that they are press-bonded. Thereby, a laminate having the sheet for evaluation, the intermediate layer 2, and the porous support member 3 in this order is formed. The laminate is cut into a piece that is 50 mm in width and 100 in length to obtain a specimen. Next, a surface of the porous support member 3 included in the specimen is entirely laid on a polyethylene terephthalate film via a double-sided adhesive tape (No. 500 available from Nitto Denko Corporation), and a 2 kg roller is rolled thereon back and forth once so that they are press-bonded. Next, the porous support member 3 is peeled off, together with the film, from the intermediate layer 2 at a peel angle of 180° and a peel rate of 100 mm/min by using a commercially available tensile testing machine. The peel strength at that time can be considered as the adhesive strength A2 between the intermediate layer 2 and the porous support member 3. The above-mentioned measurement is made under a 23°C atmosphere.

The adhesive strength A2 is, for example, 0.5 N/50 mm or more, preferably 1.0 N/50 mm or more, more preferably 1.5 N/50 mm or more, and still more preferably 2.0 N/50 mm or more, and may be 2.5 N/50 mm or more, 4.0 N/50 mm or more, or 5.0 N/50 mm or more. A higher adhesive strength A2 tends to make it possible to remove the release liner 5 from the third laminate 17 more easily. The upper limit of the adhesive strength A2 is, for example, but not particularly limited to, 10 N/50 mm.

The first laminate 15 can be produced by the following method, for example. First, the coating liquid containing a material of the separation functional layer 1 is prepared. The coating liquid may contain an organic solvent, such as N-methyl-2-pyrrolidone (NMP) or dimethylacetamide (DMAc), having a high polarity. Such an organic solvent is suitable for dissolving a polyimide resin, particularly a polyimide resin including a later-described polyimide P. The coating liquid may further contain a leveling agent for improving a coating property of the coating liquid. Next, the coating liquid is applied onto the release liner 5 to obtain a coating film. The coating film is dried to form the separation functional layer 1. Thereby, the first laminate 15 having the release liner 5 and the separation functional layer 1 can be obtained (FIG. 2A). Note that in the manufacturing method of the present embodiment, the coating liquid containing a material of the separation functional layer 1 is not applied directly onto the intermediate layer 2 or the porous support member 3, making it possible to avoid the dissolutions of the intermediate layer 2 and the porous support member 3 due to the coating liquid.

The method for applying the coating liquid is not particularly limited, and a method such as a spin coating method or a dip coating method can be used, for example. The coating liquid may be applied, for example, using a wire bar. The coating film can be dried under heating conditions, for example. The heating temperature of the coating film is, for example, 50°C or higher, and preferably 130 to 150°C. The heating time of the coating film is, for example, one minute or longer, and may be five minutes or longer or 30 minutes or longer.

As described above, the manufacturing method of the present embodiment includes applying the coating liquid containing a material of the intermediate layer 2 onto the first laminate 15, then drying the coating liquid, and thereby

forming the intermediate layer 2. The coating liquid containing a material of the intermediate layer 2 is typically a pressure-sensitive adhesive composition, and preferably a pressure-sensitive adhesive composition including a silicone-based polymer. The silicone-based polymer means a polymer having a structural unit including a siloxane bond. In the present description, the pressure-sensitive adhesive composition including the silicone-based polymer is also referred to as a "silicone-based pressure-sensitive adhesive" in some cases.

Examples of the silicone-based pressure-sensitive adhesive include a peroxide-crosslinked silicone-based pressure-sensitive adhesive, an addition-reactive silicone-based pressure-sensitive adhesive, and an active energy ray-curable silicone-based pressure-sensitive adhesive. The peroxide-crosslinked silicone-based pressure-sensitive adhesive includes an organic peroxide (benzoyl peroxide, for example). The organic peroxide causes radical crosslinking. Examples of the addition-reactive silicone-based pressure-sensitive adhesive include a hydrosilylation-type silicone-based pressure-sensitive adhesive. The hydrosilylation-type silicone-based pressure-sensitive adhesive includes an SiH group-containing siloxane cross linking agent and a platinum-based catalyst. A hydrosilylation reaction using the platinum-based catalyst causes crosslinking. The active energy ray-curable silicone-based pressure-sensitive adhesive allows a crosslinking reaction to proceed with light such as an ultraviolet ray or an electron ray. Particularly, the addition-reactive silicone-based pressure-sensitive adhesive, such as the hydrosilylation-type silicone-based pressure-sensitive adhesive, is preferable from the viewpoints of being unlikely to leave a residue on the intermediate layer 2 and being able to react at a low temperature as well as the viewpoint of reaction rate.

The silicone-based pressure-sensitive adhesive preferably includes a silicone resin component and a silicone gum component as the silicone-based polymer from the viewpoint that it is easy to control pressure-sensitive adhesiveness, peelability, and aggregability thereof.

The silicone resin component is not particularly limited, but it is preferably branched polyorganosiloxane including, in a molecule thereof, a hydroxyl group bonded to a silicon atom, and more preferably polyorganosiloxane having at least one unit selected from the group consisting of an M unit ($R_3SiO_{1/2}$), a Q unit ($SiO_2$), a T unit ($RSiO_{3/2}$), and a D unit ($R_2SiO$). In the above-mentioned units, each R is independently a monovalent hydrocarbon group or a hydroxyl group. As the monovalent hydrocarbon group, there can be mentioned an alkyl group (such as a methyl group, an ethyl group, or a propyl group), an alkenyl group (such as a vinyl group), and an aryl group (such as a phenyl group). Particularly, the silicone resin component is preferably an MQ resin composed of an M unit ($R_3SiO_{1/2}$) and a Q unit ($SiO_2$). One of these silicone resin components may be used alone or two or more of them may be used in combination.

The silicone gum component is not particularly limited, but it is preferably linear polyorganosiloxane represented by the following formula (1).

[Chemical Formula 1]

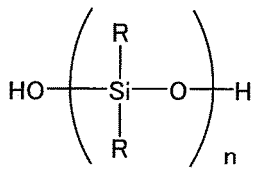 (1)

In the formula (1), each R is independently a methyl group, a phenyl group, or an alkenyl group. The number n is 100 to 10000. One of these silicone gum components may be used alone or two or more of them may be used in combination.

In the peroxide-crosslinked silicone-based pressure-sensitive adhesive, the above-mentioned silicone gum component preferably includes a methyl group. In the peroxide-crosslinked silicone-based pressure-sensitive adhesive, the methyl group of the silicone gum component is radically crosslinked. In the hydrosilylation-type silicone-based pressure-sensitive adhesive, the above-mentioned silicone gum component preferably includes an alkenyl group, particularly a vinyl group. In the hydrosilylation-type silicone-based pressure-sensitive adhesive, the alkenyl group of the silicone gum component is crosslinked by a hydrosilylation reaction.

The pressure-sensitive adhesive composition (silicone-based pressure-sensitive adhesive) may include an additive besides the silicone resin component and the silicone gum component. Examples of the additive include: a material for allowing a crosslinking reaction to proceed (such as an organic peroxide, an SiH group-containing siloxane cross linking agent, or a platinum-based catalyst); an adhesion improver (X-92-185 available from Shin-Etsu Chemical Co., Ltd., for example), a silane coupling agent, a filler, a plasticizer, an age resistor, an antistatic agent, a colorant (a pigment, a dye), and a later-described filler. One of these additives may be used alone or two or more of them may be used in combination.

The pressure-sensitive adhesive composition (silicone-based pressure-sensitive adhesive) may further include an organic solvent (such as toluene or xylene).

Specific examples of the pressure-sensitive adhesive composition (silicone-based pressure-sensitive adhesive) include "KR-3700", "KR-3701", and "KR-3704" available from Shin-Etsu Chemical Co., Ltd. These commercial products each are offered as a product including both a silicone gum component and a silicone resin component. The silicone-based pressure-sensitive adhesive may include a mixture of these commercial products.

The coating liquid containing a material of the intermediate layer 2 is applied onto the separation functional layer 1 of the first laminate 15. As the method for applying the coating liquid, the method described above for the separation functional layer 1 can be mentioned. The coating liquid is applied onto the separation functional layer 1 to form a coating film. The coating film is dried to form the intermediate layer 2. The coating film can be dried under heating conditions, for example. In one example, when the coating liquid is the addition-reactive silicone-based pressure-sensitive adhesive, the coating film may be heated and dried at 100 to 130°C. The above-mentioned heating conditions allow the coating film to be dried while allowing, for example, a crosslinking reaction of the silicone-based polymer to proceed, thereby forming a crosslinked product of the silicone-based polymer. The heating time of the coating film is, for example, one minute or longer, and may be five minutes or longer. The coating film is dried to obtain the second laminate 16 having the release liner 5, the separation functional layer 1, and the intermediate layer 2 in this order (FIG. 2B). In the second laminate 16, the intermediate layer 2 is exposed to an outside of the second laminate 16.

As described above, the intermediate layer 2 of the second laminate 16 is bonded to the porous support member 3 to obtain the third laminate 17 (FIG. 2C). The method for bonding the intermediate layer 2 to the porous support member 3 is not particularly limited and a known method can be used. For example, the intermediate layer 2 is laid on the porous support member 3 and a roller is rolled thereon back and forth once so that they are press-bonded, and thereby the intermediate layer 2 can be bonded to the porous support member 3. The release liner 5 is removed from the third laminate 17 to obtain the separation membrane 10 (FIG. 1).

As described above, the intermediate layer 2 is formed in such a manner that the ratio R of the adhesive strength A2 (N/50 mm) between the intermediate layer 2 and the porous support member 3 with respect to the adhesive strength A1 (N/50 mm) between the release liner 5 and the separation functional layer 1 is 3.1 or more. The ratio R of 3.1 or more makes it possible to remove the release liner 5 from the third laminate 17 easily. That is, at the time of removing the release liner 5 from the third laminate 17, occurrence of separation between other members, particularly between the intermediate layer 2 and the porous support member 3, is suppressed. As just described above, the manufacturing method of the present embodiment is suitable for transferring the separation functional layer 1 and the intermediate layer 2 from the release liner 5 to the porous support member 3.

Hereinafter, details of each member included in the separation membrane 10 and the release liner used in the manufacturing method of the present embodiment will be explained.

(Separation functional layer)

The separation functional layer 1 is, for example, a layer capable of allowing an acid gas contained in a gas mixture to preferentially permeate therethrough. In a preferred embodiment, the separation functional layer 1 includes a resin. Examples of the resin included in the separation functional layer 1 include a polyether block amide resin, a polyamide resin, a polyether resin, a polyimide resin, a cellulose acetate resin, a silicone resin, and a fluorine resin. The separation functional layer 1 preferably includes a polyimide resin.

A polymer included in the polyimide resin is, for example, but not particularly limited to, a polyimide P having a structural unit represented by the following formula (2). In the formula (2), X and Y each are a linking group. Examples of the polyimide P include polyimides described in Patent Literature 1 and 2.

[Chemical Formula 2]

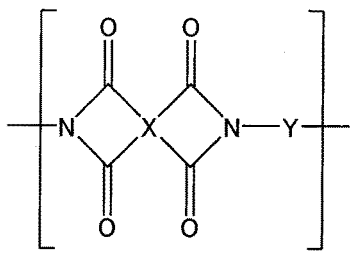
(2)

The structural unit represented by the formula (2) may be a structural unit represented by the following formula (3).

[Chemical Formula 3]

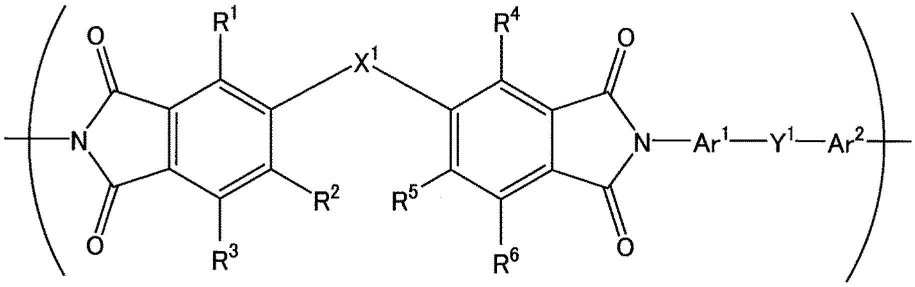

(3)

In the formula (3), $X^1$ and $Y^1$ each are a linking group. $X^1$ includes, for example, at least one selected from the group consisting of an oxygen atom, a nitrogen atom, a sulfur atom, and a silicon atom. Preferably, $X^1$ includes at least one selected from the group consisting of an oxygen atom and a nitrogen atom. More preferably, $X^1$ includes an oxygen atom. $X^1$ includes, for example, at least one functional group selected from the group consisting of an ether group, an ester group, a ketone group, a hydroxyl group, an amide group, a thioether group, and a sulfonyl group. Preferably, $X^1$ includes at least one selected from the group consisting of an ether group and an ester group.

$X^1$ may include another group, such as a hydrocarbon group, in addition to the above functional group(s). The number of carbon atoms in the hydrocarbon group is, for example, but not particularly limited to, 1 to 15. The number of carbon atoms may be 1 to 3, or may be 6 to 15. The valence of the hydrocarbon group is not particularly limited, either. Preferably, the hydrocarbon group is a divalent hydrocarbon group. Examples of the divalent hydrocarbon group include a methylene group, an ethylene group, a propane-1,3-diyl group, a propane-2,2-diyl group, a butane-1,4-diyl group, a pentane-1,5-diyl group, a 2,2-dimethylpropane-1,3-diyl group, a 1,4-phenylene group, a 2,5-di-tert-butyl-1,4-phenylene group, a 1-methyl-1,1-ethanediylbis(1,4-phenylene) group, and a biphenyl-4,4'-diyl group. Furthermore, at least one hydrogen atom included in these hydrocarbon groups may be substituted by a halogen atom.

$X^1$ is a linking group represented by, for example, a general formula $-O-R^7-O-$ or a general formula $-COO-R^8-OOC-$. $R^7$ and $R^8$ each are a divalent hydrocarbon group having 1 to 15 carbon atoms. Examples of the divalent hydrocarbon group include those described above.

$X^1$ may not include the above-mentioned functional groups. Examples of such $X^1$ include an alkylene group. The number of carbon atoms in the alkylene group is not particularly limited, and may be, for example, 1 to 15 or 1 to 5. The alkylene group may be branched, but is preferably linear. A part of hydrogen atoms in the alkylene group may be substituted by a halogen atom. However, the alkylene group is preferably an unsubstituted alkylene group, namely, a linear or branched alkylene group.

Y' includes, for example, at least one selected from the group consisting of an oxygen atom, a nitrogen atom, a sulfur atom, and a silicon atom. Preferably, Y' includes at least one selected from the group consisting of an oxygen atom and a nitrogen atom. More preferably, Y' includes an oxygen atom. Y' includes, for example, at least one functional group selected from the group consisting of an ether group, an ester group, a ketone group, a hydroxyl group, an amide group, a thioether group, and a sulfonyl group. Preferably, Y' includes an ether group.

Y' may include another group, such as a hydrocarbon group, in addition to the above functional group(s). As the hydrocarbon group, the hydrocarbon groups stated above for $X^1$ can be mentioned. Y' may be identical to or different from $X^1$.

In the formula (3), $R^1$ to $R^6$ each are independently a hydrogen atom, a halogen atom, a hydroxyl group, a sulfonic acid group, an alkoxy group having 1 to 30 carbon atoms, or a hydrocarbon group having 1 to 30 carbon atoms. $R^1$ to $R^6$ each are preferably a hydrogen atom. The alkoxy group or hydrocarbon group represented by $R^1$ to $R^6$ may each be linear or branched. The number of carbon atoms in the alkoxy group or hydrocarbon group is preferably 1 to 20, more preferably 1 to 10, and particularly preferably 1 to 5. Examples of the alkoxy group include a methoxy group, an ethoxy group, and a propoxy group. Examples of the hydrocarbon group include a methyl group, an ethyl group, and a propyl group. At least one hydrogen atom included in the alkoxy group or hydrocarbon group may be substituted by a halogen atom.

$R^2$ and $R^3$ may be bonded to each other to form a ring structure, and $R^5$ and $R^6$ may be bonded to each other to form a ring structure. Each ring structure is, for example, a benzene ring.

In the formula (3), $Ar^1$ and $Ar^2$ each are a divalent aromatic group. The divalent aromatic group includes an aromatic ring. In the formula (3), it is preferable that a nitrogen atom in a phthalimide structure be bonded directly to the aromatic ring included in $Ar^1$, or the aromatic ring included in $Ar^2$. In the formula (3), Y' may be bonded directly to both of the aromatic ring included in $Ar^1$ and the aromatic ring included in $Ar^2$.

In $Ar^1$ and $Ar^2$, it is preferable that the aromatic ring be composed of a carbon atom. It should be noted that

the aromatic ring may be a heteroaromatic ring including a hetero atom such as an oxygen atom, a nitrogen atom, or a sulfur atom. The aromatic ring may be polycyclic, but preferably it is monocyclic. The number of carbon atoms that the aromatic ring has is not particularly limited, and it may be 4 to 14, for example, and it may be 6 to 10. Examples of the aromatic ring include a benzene ring, a naphthalene ring, an anthracene ring, a phenanthrene ring, a furan ring, a pyrrole ring, a pyridine ring, and a thiophene ring.

In $Ar^1$ and $Ar^2$, the aromatic ring may or may not have a substituent. Examples of the substituent of the aromatic ring include a halogen atom, a hydroxyl group, a sulfonic group, an alkoxy group having 1 to 30 carbon atoms, and a hydrocarbon group having 1 to 30 carbon atoms. As the alkoxy group and the hydrocarbon group, the alkoxy groups and the hydrocarbon groups stated above for $R^1$ to $R^6$ can be mentioned. In the case where the aromatic ring has a plurality of substituents, the substituents may be identical to or different from each other. Preferably, $Ar^1$ and $Ar^2$ each are a phenylene group that may have a substituent, or a naphthalenediyl group that may have a substituent.

The separation functional layer 1 is preferably composed substantially of a resin. In the present description, the phrase "composed substantially of" means exclusion of other component that alters essential characteristics of a material referred to, and for example means that 95 wt% or more or even 99 wt% or more is composed of the material. Note that the separation functional layer 1 may further include an additive, such as a leveling agent, besides the resin.

In another preferred embodiment, the separation functional layer 1 includes an ionic liquid. The separation functional layer 1 includes, for example, a double-network gel including an ionic liquid. The double-network gel is a gel including two types of network structures independent from each other. The double-network gel includes, for example, a first network structure composed mainly of an organic material, a second network structure composed mainly of an inorganic material, and an ionic liquid. In the present specification, the phrase "composed mainly of" means that 50 wt% or more or even 70 wt% or more is composed of the material.

The organic material for constituting the first network structure includes, for example, a polymer such as polyacrylamide (particularly, polydialkylacrylamide such as polydimethylacrylamide). The polymer included in the organic material may have a structural unit derived from an acrylamide derivative and may further include a cross-linked structure. The polymer including a cross-linked structure can be produced by a known method. First, a prepolymer having a structural unit having an N-hydroxysuccinimide ester group is prepared, for example. The structural unit having an N-hydroxysuccinimide ester group derives from N-acryloxysuccinimide, for example. Next, the prepolymer is allowed to react with an amine-based cross linking agent to obtain a polymer including a cross-linked structure. The amine-based cross linking agent is a compound, such as ethylene glycol bis(3-aminopropyl) ether, having two or more primary amino groups.

The second network structure may include a network of a plurality of particles. The network of the plurality of particles are formed by, for example, the plurality of particles being bonded to each other by hydrogen bonds. The particles included in the second network structure may include an inorganic material. The particles included in the second network structure may include an organic material. Examples of the inorganic material included in the particles include silica, titania, and alumina. In one example, the particles included in the second network structure are silica particles.

In the present embodiment, examples of the ionic liquid include an ionic liquid having: imidazolium, pyridinium, ammonium, or phosphonium; and a substituent having 1 or more carbon atoms.

In an ionic liquid having imidazolium and a substituent having 1 or more carbon atoms, examples of the substituent having 1 or more carbon atoms include an alkyl group having 1 to 20 carbon atoms, a cycloalkyl group having 3 to 14 carbon atoms, and an aryl group having 6 to 20 carbon atoms, and these may be each further substituted by a hydroxy group, a cyano group, an amino group, a monovalent ether group, or the like (for example, a hydroxyalkyl group having 1 to 20 carbon atoms).

Examples of the alkyl group having 1 to 20 carbon atoms include a methyl group, an ethyl group, an n-propyl group, an n-butyl group, an n-pentyl group, an n-hexyl group, an n-heptyl group, an n-octyl group, an n-nonyl group, an n-decyl group, an n-undecyl group, an n-dodecyl group, an n-tridecyl group, an n-tetradecyl group, an n-pentadecyl group, an n-hexadecyl group, an n-heptadecyl group, an n-octadecyl group, an n-nonadecyl group, an n-eicosadecyl group, an i-propyl group, a sec-butyl group, an i-butyl group, a 1-methylbutyl group, a 1-ethylpropyl group, a 2-methylbutyl group, an i-pentyl group, a neopentyl group, a 1,2-dimethylpropyl group, a 1,1-dimethylpropyl group, a t-pentyl group, a 2-ethylhexyl group, and a 1,5-dimethylhexyl group. These may be each further substituted by a hydroxy group, a cyano group, an amino group, a monovalent ether group, or the like.

The above alkyl group may be substituted by a cycloalkyl group. The number of carbon atoms in the alkyl group substituted by the cycloalkyl group is, for example, 1 or more and 20 or less. Examples of the alkyl group substituted by the cycloalkyl group include a cyclopropyl methyl group, a cyclobutyl methyl group, a cyclohexyl methyl group, and a cyclohexyl propyl group. These may be each further substituted by a hydroxy group, a cyano group, an amino group, a monovalent ether group, or the like.

Examples of the cycloalkyl group having 3 to 14 carbon atoms include a cyclopropyl group, a cyclobutyl group, a cyclopentyl group, a cyclohexyl group, a cycloheptyl group, a cyclooctyl group, a cyclododecyl group, a norbornyl group, a bornyl group, and an adamantyl group. These may be each further substituted by a hydroxy group, a cyano

group, an amino group, a monovalent ether group, or the like.

Examples of the aryl group having 6 to 20 carbon atoms include a phenyl group, a toluyl group, a xylyl group, a mesityl group, an anisyl group, a naphthyl group, and a benzyl group. These may be each further substituted by a hydroxy group, a cyano group, an amino group, a monovalent ether group, or the like.

A compound having imidazolium and a substituent having 1 or more carbon atoms may further have a substituent such as an alkyl group, and may form a salt with a counter anion. Examples of the counter anion include alkyl sulfate, tosylate, methanesulfonate, acetate, bis(fluorosulfonyl)imide, bis(trifluoromethanesulfonyl)imide, thiocyanate, dicyanamide, tricyanomethanide, tetracyanoborate, hexafluorophosphate, tetrafluoroborate, and halide. From the viewpoint of gas separation performance, preferred are bis(fluorosulfonyl)imide, bis(trifluoromethanesulfonyl)imide, dicyanamide, tricyanomethanide, and tetracyanoborate.

Specific examples of the ionic liquid having imidazolium and a substituent having 1 or more carbon atoms include 1-ethyl-3-methylimidazolium bis(fluorosulfonyl)imide, 1-ethyl-3-methylimidazolium dicyanamide, 1-butyl-3-methylimidazolium bromide, 1-butyl-3-methylimidazolium chloride, 1-butyl-3-methylimidazolium tetrafluoroborate, 1-butyl-3-methylimidazolium hexafluorophosphate, 1-butyl-3-methylimidazolium trifluoromethanesulfonate, 1-butyl-3-methylimidazolium tetrachloroferrate, 1-butyl-3-methylimidazolium iodide, 1-butyl-2,3-dimethylimidazolium chloride, 1-butyl-2,3-dimethylimidazolium hexafluorophosphate, 1-butyl-2,3-dimethylimidazolium tetrafluoroborate, 1-butyl-3-methylimidazolium bis(trifluoromethanesulfonyl)imide, 1-butyl-2,3-dimethylimidazolium bis(trifluoromethanesulfonyl)imide, 1-butyl-3-methylimidazolium trifluoro(trifluoromethyl)borate, 1-butyl-3-methylimidazolium tribromide, 1,3-dimesitylimidazolium chloride, 1,3-bis(2,6-diisopropylphenyl)imidazolium chloride, 1,3-diisopropylimidazolium tetrafluoroborate, 1,3-di-tert-butylimidazolium tetrafluoroborate, 1,3-dicyclohexylimidazolium tetrafluoroborate, 1,3-dicyclohexylimidazolium chloride, 1,2-dimethyl-3-propylimidazolium iodide, 1-hexyl-3-methylimidazolium chloride, 1-hexyl-3-methylimidazolium hexafluorophosphate, 1-hexyl-3-methylimidazolium tetrafluoroborate, 1-hexyl-3-methylimidazolium bromide, 1-methyl-3-propylimidazolium iodide, 1-methyl-3-n-octylimidazolium bromide, 1-methyl-3-n-octylimidazolium chloride, 1-methyl-3-n-octylimidazolium hexafluorophosphate, 1-methyl-3-[6-(methylsulfinyl)hexyl]imidazolium p-toluenesulfonate, 1-ethyl-3-methylimidazolium tricyanomethanide, and 1-(2-hydroxyethyl)-3-methylimidazolium bis(trifluoromethanesulfonyl)imide.

Among these, from the viewpoint of gas separation performance, particularly preferred are 1-ethyl-3-methylimidazolium bis(fluorosulfonyl)imide ([EMI][FSI]), 1-ethyl-3-methylimidazolium dicyanamide ([EMI][DCA]), 1-ethyl-3-methylimidazolium tricyanomethanide ([EMI][TCM]), 1-butyl-3-methylimidazolium bis(trifluoromethanesulfonyl)imide ([$C_4$mim][$TF_2N$]), and 1-(2-hydroxyethyl)-3-methylimidazolium bis(trifluoromethanesulfonyl)imide ([$C_2$OHim][$TF_2N$]).

The method for producing the double-network gel is not particularly limited, and for example, the method disclosed in E. Kamio et al., Adv.Mater, 29, 1704118 (2017) can be used.

A content of the ionic liquid in the double-network gel is, for example, 50 wt% or more, preferably 60 wt% or more, more preferably 70 wt% or more, and still more preferably 80 wt% or more. The higher the content of the ionic liquid is, the more preferentially the separation functional layer 1 can allow the acid gas contained in the gas mixture to permeate therethrough. The upper limit of the content of the ionic liquid is, for example, but not particularly limited to, 95 wt%.

A content of the first network structure composed mainly of an organic material in the double-network gel is, for example, 1 wt% or more, preferably 5 wt% or more, and more preferably 10 wt% or more. The upper limit of the content of the first network structure is 15 wt%, for example. A content of the second network structure composed mainly of an inorganic material in the double-network gel is, for example, 1 wt% or more from the viewpoint of improving the strength of the double-network gel. The upper limit of the content of the second network structure is 5 wt%, for example. The ratio of the total value of the weight of the first network structure and the weight of the second network structure with respect to the weight of the double-network gel is, for example, 2 wt% or more, preferably 5 wt% or more, and more preferably 10 wt% or more. This ratio is preferably 20 wt% or less. In this embodiment, the separation functional layer 1 is preferably composed substantially of the double-network gel.

A thickness of the separation functional layer 1 is, for example, 50 $\mu$m or less, preferably 25 $\mu$m or less, and more preferably 15 $\mu$m or less. In some cases, the thickness of the separation functional layer 1 may be 10 $\mu$m or less, 5.0 $\mu$m or less, or 2.0 $\mu$m or less. The thickness of the separation functional layer 1 may be 0.05 $\mu$m or more, or 0.1 $\mu$m or more.

(Intermediate layer)

As described above, the intermediate layer 2 is formed from, for example, a pressure-sensitive adhesive composition, particularly a pressure-sensitive adhesive composition (a silicone-based pressure-sensitive adhesive) including a silicone-based polymer. The intermediate layer 2 formed from a silicone-based pressure-sensitive adhesive includes, for example, a crosslinked product of a silicone-based polymer. The intermediate layer 2 as just described has a high cohesive strength and is thus suitable for improving the adhesive strength A2. A content of the crosslinked product of a silicone-based polymer in the intermediate layer 2 is, for example, but not particularly limited to, 60 wt% or more,

preferably 70 wt% or more, and more preferably 90 wt% or more. The intermediate layer 2 may be composed substantially of the crosslinked product of a silicone-based polymer.

The intermediate layer 2 may further include the above-mentioned additive, particularly a filler. The intermediate layer 2 including a filler is suitable for improving an acid gas permeation rate through the separation membrane 10. The filler may include an inorganic material. The filler may include an organic material. Examples of the inorganic material included in the filler include zeolite, silica, titania, and alumina. Examples of the organic material include a (meth)acrylic polymer. In the present description, the term "(meth)acrylic polymer" means an acrylic polymer and/or a methacrylic polymer.

The filler may include a metal organic framework (MOF). The metal organic framework is also referred to as a porous coordination polymer (PCP). The metal organic framework includes a metal ion and an organic ligand, for example. Examples of the metal ion include a Cu ion and a Zn ion. The organic ligand includes an aromatic ring, for example. Examples of the aromatic ring included in the organic ligand include a benzene ring and an imidazole ring. Examples of the organic ligand include trimesic acid and 2-methylimidazole. Specific examples of the metal organic framework include HKUST-1 and ZIF-8.

The filler typically has a particulate shape. In the present description, the "particulate shape" is a shape such as a spherical shape, an elliptical shape, a flaky shape, or a fibrous shape.

An average particle diameter D of the filler is, for example, but not particularly limited to, 5 μm or less, and may be 1 μm or less, 800 nm or less, 600 nm or less, 500 nm or less, 400 nm or less, 300 nm or less, 200 nm or less, or even 100 nm or less. The lower limit of the average particle diameter D of the filler is 1 nm, for example. The average particle diameter D of the filler can be determined by the following method. First, a cross section of the intermediate layer 2 is observed with a transmission electron microscope. The area of a specific particle of the filler on the resulting electron microscope image is calculated by image processing. The diameter of a circle having the same area as the calculated area is regarded as the particle diameter (the diameter of the particle) of the specific filler particle. The particle diameter is calculated for any number (at least 50) of the filler particles, and the average of the calculated values is regarded as the average particle diameter D of the filler.

From the viewpoint of suppressing an increase in a storage elastic modulus of the intermediate layer 2, a content of the filler in the intermediate layer 2 is, for example, 40 wt% or less, and may be 30 wt% or less, 20 wt% or less, or even 10 wt% or less. The lower limit of the content of the filler in the intermediate layer 2 is not particularly limited, but it is, for example, 1 wt% from the viewpoint of improving the acid gas permeation rate.

The intermediate layer 2 formed from the pressure-sensitive adhesive composition tends to have a low storage elastic modulus. In one example, the storage elastic modulus of the intermediate layer 2 at 25°C is, for example, $1.0 \times 10^5$ Pa or less and preferably $0.95 \times 10^5$ Pa or less, and may be $0.90 \times 10^5$ Pa or less or $0.85 \times 10^5$ Pa or less. The lower the storage elastic modulus of the intermediate layer 2 is, the more the adhesive strength A2 between the intermediate layer 2 and the porous support member 3 tends to increase. The storage elastic modulus of the intermediate layer 2 at 25°C is preferably $0.1 \times 10^5$ Pa or more.

In another aspect, the present invention provides the separation membrane 10 including:

the separation functional layer 1;
the porous support member 3 supporting the separation functional layer 1; and
the intermediate layer 2 disposed between the separation functional layer 1 and the porous support member 3, wherein
the intermediate layer 2 has a storage elastic modulus of $1.0 \times 10^5$ Pa or less at 25°C.

The storage elastic modulus of the intermediate layer 2 at 25°C can be determined by the following method. First, a measurement sample made from a material constituting the intermediate layer 2 is prepared. The measurement sample has a disk shape. The measurement sample has a bottom diameter of 8 mm and a thickness of 2 mm. The measurement sample may be a sample obtained by preparing a plurality of the intermediate layers 2 and punching out a laminate obtained by laminating these into a disk shape. Next, the measurement sample is subjected to a dynamic viscoelasticity measurement. For the dynamic viscoelasticity measurement, "Advanced Rheometric Expansion System (ARES)" available from Rheometric Scientific Inc. can be used, for example. From the result of the dynamic viscoelasticity measurement, the storage elastic modulus of the intermediate layer 2 at 25°C can be determined. The conditions for the dynamic viscoelasticity measurement are as follows.

•Measurement conditions

Frequency: 1 Hz

Deformation mode: Torsion
Measurement temperature: -70°C to 150°C
Temperature increase rate: 5°C/minute

A thickness of the intermediate layer 2 is, for example, but not particularly limited to, less than 50 μm, preferably 40 μm or less, more preferably 30 μm or less, still more preferably 10 μm or less, and particularly preferably 5 μm or less. The lower limit of the thickness of the intermediate layer 2 is, for example, but not particularly limited to, 0.1 μm, and may be 1.0 μm. The thickness of the intermediate layer 2 is preferably 1.0 to 5.0 μm from the viewpoint of adjusting properly the adhesive strength A2 between the intermediate layer 2 and the porous support member 3 as well as a permeation rate of a permeated fluid from the separation membrane 10.

In the case where the intermediate layer 2 includes the above-mentioned filler, a thickness E (μm) of the intermediate layer 2 and the average particle diameter D (μm) of the filler preferably satisfies the following relational expression (I). When the relational expression (I) is satisfied, an addition of the filler tends to make it possible to improve easily the acid gas permeation rate through the separation membrane 10 while suppressing a decrease in the adhesive strength A2 between the intermediate layer 2 and the porous support member 3.

$$E > 4 \times D \qquad (I)$$

(Porous support member)

The porous support member 3 supports the separation functional layer 1 via the intermediate layer 2. Examples of the porous support member 3 include: a nonwoven fabric; porous polytetrafluoroethylene; an aromatic polyamide fiber; a porous metal; a sintered metal; a porous ceramic; a porous polyester; porous nylon; an activated carbon fiber; latex; silicone; silicone rubber; a permeable (porous) polymer including at least one selected from the group consisting of polyvinyl fluoride, polyvinylidene fluoride, polyurethane, polypropylene, polyethylene, polycarbonate, polysulfone, polyether ether ketone, polyacrylonitrile, polyimide, and polyphenylene oxide; a metallic foam having an open cell or a closed cell; a polymer foam having an open cell or a closed cell; silica; a porous glass; and a mesh screen. The porous support member 3 may be a combination of two or more of these materials. The porous support member 3 preferably includes at least one selected from the group consisting of polyvinylidene fluoride (PVDF) and polysulfone (PSF).

The porous support member 3 has an average pore diameter of 0.01 to 0.4 μm, for example. A thickness of the porous support member 3 is, for example, but not particularly limited to, 10 μm or more, preferably 20 μm or more, and more preferably 50 μm or more. The thickness of the porous support member 3 is, for example, 300 μm or less, preferably 200 μm or less, and more preferably 150 μm or less.

(Release liner)

Examples of the release liner 5 include: a film including a resin; paper; and a sheet including a metal material such as aluminum or stainless steel. A sheet including a metal material tends to have a high heat resistance. The release liner 5 is preferably a film including a resin from the viewpoint that such a film has an excellent surface smoothness. Examples of a polymer included in the resin in the release liner 5 include: polyolefin such as polyethylene, polypropylene, polybutene, polybutadiene, or polymethylpentene; polyester such as polyethylene terephthalate, polybutylene terephthalate, or polyethylenenaphthalate; polyvinyl chloride and a vinyl chloride copolymer; polyurethane; and an ethylene-vinyl acetate copolymer. Preferred is polyester, particularly polyethylene terephthalate.

A surface of the release liner 5 may be subjected to a release treatment. The release treatment can be performed by, for example, applying a release treatment agent onto the surface of the release liner 5. Examples of the release treatment agent include a silicone-based release treatment agent, a long-chain alkyl-based release treatment agent, a fluorine release treatment agent, and a molybdenum sulfide-based release treatment agent. One of these release treatment agents may be used alone or two or more of them may be used in combination. The release liner 5 is preferably a polyethylene terephthalate (PET) film subjected to the release treatment.

A thickness of the release liner 5 is, for example, but not particularly limited to, 5 to 100 μm, and preferably 10 to 50 μm.

The release liner 5 preferably has an adhesive strength A3 of 0.01 to 20 N/50 mm measured by the following test. First, the release liner 5 is cut into a piece that is 50 mm in width and 100 in length to obtain a specimen. Next, a surface of the specimen is entirely laid on an adhesive tape (No. 31B available from Nitto Denko Corporation), and a 2 kg roller is rolled thereon back and forth once so that they are press-bonded. Next, the adhesive tape is peeled off from the specimen at a peel angle of 180° and a peel rate of 100 mm/min by using a commercially available tensile testing machine. The peel strength at that time is determined as the adhesive strength A3. The above-mentioned measurement

is made under a 23°C atmosphere.

The adhesive strength A3 of the release liner 5 is preferably 0.1 N/50 mm or more, and more preferably 0.2 N/50 mm or more, and may be 0.3 N/50 mm or more, 0.5 N/50 mm or more, or 1.0 N/50 mm or more. The adhesive strength A3 may be 15 N/50 mm or less, 10 N/50 mm or less, or 5.0 N/50 mm or less.

(Properties of separation membrane)

The separation membrane 10 can, for example, allow an acid gas contained in a gas mixture to preferentially permeate therethrough. In an example, a permeation rate T1 of carbon dioxide permeating through the separation membrane 10 is, for example, 50 GPU or more, and may be 100 GPU or more, 300 GPU or more, 500 GPU or more, 700 GPU or more, or even 800 GPU or more. The upper limit of the permeation rate T1 is, for example, but not particularly limited to, 2000 GPU, and may be 1000 GPU. Note that GPU means $10^{-6}$•$cm^3$(STP)/(sec•$cm^2$•cmHg). The symbol "$cm^3$(STP)" means the volume of carbon dioxide at 1 atmospheric pressure and 0°C.

The permeation rate T1 can be determined by the following method. First, a gas mixture composed of carbon dioxide and nitrogen is supplied to a space adjacent to one surface (a principal surface 11, on the separation functional layer side, of the separation membrane 10, for example) of the separation membrane 10 while a space adjacent to another surface (a principal surface 12, on the porous support member side, of the separation membrane 10) of the separation membrane 10 is decompressed. Thereby, a permeated fluid that has permeated through the separation membrane 10 can be obtained. A weight of the permeated fluid as well as a volume ratio of carbon dioxide and a volume ratio of nitrogen in the permeated fluid are measured. From the measurement results, the permeation rate T1 can be calculated. In the above-mentioned procedure, a concentration of the carbon dioxide in the gas mixture is 50 vol% under standard conditions (0°C, 101 kPa). The gas mixture supplied to the space adjacent to the one surface of the separation membrane 10 has a temperature of 30°C and a pressure of 0.1 MPa. The space adjacent to the other surface of the separation membrane 10 is decompressed in such a manner that a pressure in the space is lower than an atmospheric pressure in a measurement environment by 0.1 MPa.

Under the above measurement conditions for the permeation rate T1, a separation factor $\alpha$ of the separation membrane 10 for carbon dioxide with respect to nitrogen is, for example, but not particularly limited to, 20 or more, and preferably 25 or more. The upper limit of the separation factor $\alpha$ is, for example, but not particularly limited to, 50. The separation factor $\alpha$ can be calculated by the following formula. It should be noted that in the following formula, $X_A$ and $X_B$ are respectively a volume ratio of the carbon dioxide and a volume ratio of the nitrogen in the gas mixture. $Y_A$ and $Y_B$ are respectively a volume ratio of the carbon dioxide and a volume ratio of the nitrogen in the permeated fluid that has permeated through the first separation membrane 10.

$$\text{Separation factor } \alpha = (Y_A/Y_B)/(X_A/X_B)$$

Furthermore, a permeation rate T2 of carbon dioxide permeating through the intermediate layer 2 is, for example, 100 GPU or more, and may be 500 GPU or more, 1000 GPU or more, 1500 GPU or more, 2000 GPU or more, or even 3000 GPU or more. The upper limit of the permeation rate T2 is, for example, but not particularly limited to, 50000 GPU. The permeation rate T2 can be measured by the same method as that for the permeation rate T1, except that a laminate of the intermediate layer 2 and the porous support member 3 is used instead of the separation membrane 10.

As a use of the separation membrane 10 of the present embodiment, there can be mentioned the use for separating an acid gas from a gas mixture containing the acid gas. The acid gas in the gas mixture is, for example, carbon dioxide, hydrogen sulfide, carbonyl sulfide, sulfur oxide (SOx), hydrogen cyanide, and nitrogen oxide (NOx), and is preferably carbon dioxide. The gas mixture contains a gas other than the acid gas. The other gas is, for example, a nonpolar gas such as hydrogen or nitrogen or an inert gas such as helium, and is preferably nitrogen. Particularly, the separation membrane 10 of the present embodiment is suitably used for separating carbon dioxide from a gas mixture containing carbon dioxide and nitrogen. However, the use of the separation membrane 10 is not limited to the use for separating an acid gas from the above-mentioned gas mixture.

<Embodiment of membrane separation device>

As shown in FIG. 3, a membrane separation device 100 of the present embodiment includes the separation membrane 10 and a tank 20. The tank 20 includes a first chamber 21 and a second chamber 22. The separation membrane 10 is disposed in the tank 20. In the tank 20, the separation membrane 10 separates the first chamber 21 and the second chamber 22 from each other. The separation membrane 10 extends from one of a pair of wall surfaces of the tank 20 to the other.

The first chamber 21 has an inlet 21a and an outlet 21b. The second chamber 22 has an outlet 22a. The inlet

21a, the outlet 21b, and the outlet 22a each are, for example, an opening provided in the wall surfaces of the tank 20.

Membrane separation using the membrane separation device 100 is performed by the following method, for example. First, a gas mixture 30 containing an acid gas is supplied to the first chamber 21 via the inlet 21a. A concentration of the acid gas in the gas mixture 30 is, for example, but not particularly limited to, 0.01 vol% (100 ppm) or more, preferably 1 vol% or more, more preferably 10 vol% or more, still more preferably 30 vol% or more, and particularly preferably 50 vol% or more, under standard conditions. The upper limit of the concentration of the acid gas in the gas mixture 30 is, for example, but not particularly limited to, 90 vol% under standard conditions.

A pressure in the first chamber 21 may be increased by supplying the gas mixture 30. The membrane separation device 100 may further include a pump (not shown) for increasing a pressure of the gas mixture 30. The pressure of the gas mixture 30 to be supplied to the first chamber 21 is, for example, 0.1 MPa or more, and preferably 0.3 MPa or more.

A pressure in the second chamber 22 may be decreased while the gas mixture 30 is supplied to the first chamber 21. The membrane separation device 100 may further include a pump (not shown) for decreasing the pressure in the second chamber 22. The pressure in the second chamber 22 may be decreased such that a space in the second chamber 22 has a pressure lower than an atmospheric pressure in a measurement environment by, for example, 10 kPa or more, preferably 50 kPa or more, and more preferably 100 kPa or more.

Supply of the gas mixture 30 to the first chamber 21 allows to obtain, on the other surface side of the separation membrane 10, a permeated fluid 35 having a content of an acid gas higher than that in the gas mixture 30. That is, the permeated fluid 35 is supplied to the second chamber 22. The permeated fluid 35 contains, for example, an acid gas as a main component. The permeated fluid 35 may contain a small amount of a gas other than the acid gas. The permeated fluid 35 is discharged outside the tank 20 via the outlet 22a.

The concentration of the acid gas in the gas mixture 30 gradually decreases from the inlet 21a toward the outlet 21b in the first chamber 21. The gas mixture 30 processed in the first chamber 21 (a non-permeated fluid 36) is discharged outside the tank 20 via the outlet 21b.

The membrane separation device 100 of the present embodiment is suitable for a flow-type (continuous-type) membrane separation method. The membrane separation device 100 of the present embodiment may be used for a batch-type membrane separation method.

<Modification of membrane separation device>

As shown in FIG. 4, a membrane separation device 110 of the present embodiment includes a central tube 41 and a laminate 42. The laminate 42 includes the separation membrane 10. The membrane separation device 110 is a spiral membrane element.

The central tube 41 has a cylindrical shape. The central tube 41 has, in a surface thereof, a plurality of holes for allowing the permeated fluid 35 to flow into the central tube 41. Examples of a material of the central tube 41 include: a resin such as an acrylonitrile-butadiene-styrene copolymer resin (ABS resin), a polyphenylene ether resin (PPE resin), or a polysulfone resin (PSF resin); and a metal such as stainless steel or titanium. The central tube 41 has an inner diameter in a range of 20 to 100 mm, for example.

The laminate 42 further includes a supply-side flow passage material 43 and a permeation-side flow passage material 44 in addition to the separation membrane 10. The laminate 42 is wound around the central tube 41. The membrane separation device 110 may further include an exterior material (not shown).

For example, a resin net composed of polyphenylene sulfide (PPS) or an ethylene-chlorotrifluoroethylene copolymer (ECTFE) can be used as the supply-side flow passage material 43 and the permeation-side flow passage material 44.

Membrane separation using the membrane separation device 110 is performed by the following method, for example. First, the gas mixture 30 is supplied into one end of the wound laminate 42. The permeated fluid 35 that has permeated through the separation membrane 10 of the laminate 42 moves into the central tube 41. The permeated fluid 35 is discharged outside via the central tube 41. The gas mixture 30 processed by the membrane separation device 110 (the non-permeated fluid 36) is discharged outside from another end of the wound laminate 42. Thus, the acid gas can be separated from the gas mixture 30.

EXAMPLES

Hereinafter, the present invention will be described in more detail by way of examples and comparative examples, but the present invention is not limited to these examples.

(Example 1)

First, bis(1,3-dioxo-1,3-dihydroisobenzofuran-5-carboxylic acid) ethylene (25.12 g, 60 mmol) was prepared as

a tetracarboxylic dianhydride, and 4,4'-diaminodiphenyl ether (12.26 g, 60 mmol) was prepared as a diamine compound. Next, the diamine compound was dissolved in N-methyl-2-pyrrolidone to obtain a solution. The tetracarboxylic dianhydride was added to the obtained solution under a room temperature condition to obtain polyamide acid. Next, the polyamide acid was chemically imidized using triethylamine (1.56 g, 15.4 mmol) and acetic anhydride (9.44 g, 92.5 mmol). The chemical imidization was carried out in N-methyl-2-pyrrolidone under a temperature condition of 60°C. The obtained solution was added to a 50 vol% methanol aqueous solution. Thereby, a polyimide P subjected to a reprecipitation treatment was obtained.

Next, the obtained polyimide P was dissolved in N-methyl-2-pyrrolidone to prepare a coating liquid. A leveling agent (SURFLON S-243 (a fluorine-based surfactant) available from AGC Seimi Chemical Co., Ltd.) was added to the coating liquid. The coating liquid was applied onto a release liner (PET-75-SBK3 available from FUJIKO Co., Ltd.) to obtain a coating film. Next, the coating film was dried at 130 to 150°C for 30 minutes to produce a separation functional layer.

Next, a silicone-based pressure-sensitive adhesive (YSR-3022 available from Momentive Performance Materials Inc.) was mixed with a cross linking agent (benzoyl peroxide) to prepare a coating liquid. The coating liquid was applied onto a laminate composed of the release liner and the separation functional layer to form a coating film. The coating film was dried under heating conditions to produce an intermediate layer. The intermediate layer was bonded to a porous support member to obtain a laminate of Example 1 (a third laminate) having the release liner, the separation functional layer, the intermediate layer, and the porous support member in this order. As the porous support member, a UF membrane (ultrafiltration membrane) RS-50 (a laminate of a PVDF porous layer and a PET nonwoven fabric) available from Nitto Denko Corporation was used. The intermediate layer was bonded to the PVDF porous layer of the RS-50.

(Examples 2 to 28)

Laminates of Examples 2 to 28 were obtained in the same manner as in Example 1, except that the composition of the coating liquid containing the materials of the intermediate layer, the thickness of the intermediate layer, and the type of the release liner were changed.

[Peelability of release liner]

The release liner used in each of Examples 1 to 28 was measured for the adhesive strength A3 by the above-mentioned method and evaluated for peelability according to the following criterion.

Super light: The adhesive strength A3 was less than 0.10 N/50 mm.
Light: The adhesive strength A3 was 0.10 N/50 mm or more and less than 0.50 N/50 mm.
Moderate: The adhesive strength A3 was 0.50 N/50 mm or more and less than 1.0 N/50 mm.
Heavy: The adhesive strength A3 was 1.0 N/50 mm or more.

[Storage elastic modulus of intermediate layer]

The storage elastic modulus of the intermediate layer at 25°C was measured by the above-mentioned method. The dynamic viscoelasticity measurement was made using "Advanced Rheometric Expansion System (ARES)" available from Rheometric Scientific Inc.

[Adhesive strengths A1 and A2]

The adhesive strength A1 between the release liner and the separation functional layer and the adhesive strength A2 between the intermediate layer and the porous support member were measured by the above-mentioned methods.

[Transfer property]

It was attempted to peel off the release liner from the laminate of each of Examples 1 to 28 to transfer the separation functional layer and the intermediate layer from the release liner to the porous support member. The appearance, etc. at that time were observed visually to evaluate the transfer property of the laminate by the following criterion.

o: The separation functional layer did not remain on the release liner and the laminate was able to be transferred entirely.

Δ: While the starting peel strength of the release liner was high, the laminate was able to be transferred entirely when it was able to be peeled at an end.
×: The separation functional layer remained on the release liner.

[Coating property of coating liquid with respect to release liner]

With respect to the release liner used in each of Examples 1 to 28, the coating property of the coating liquid for producing the separation functional layer was evaluated. This evaluation was made using both of the coating liquid used in Examples 1 to 28 and a coating liquid having the same composition as that of the coating liquid used in Examples 1 to 28 except that no leveling agent was contained therein. Specifically, the coating liquids each were separately applied onto the release liner, the appearance of the coating film was observed visually, and the coating property was evaluated by the following criterion.

◦: No repelling or defect was observed on the entire surface.
Δ: Although repelling was caused at a coating end, no defect was observed on the film surface.
×: Repelling of the coating liquid was observed on the entire surface and a defect was caused on the film surface.

[Evaluation on separation performance of intermediate layer]

Regarding each of Examples 7, 16, and 22 to 28, the separation performance of the intermediate layer was evaluated by the following method. First, a laminate of the intermediate layer and the porous support member was prepared as a specimen. The laminate was produced by applying the coating liquid containing the materials of the intermediate layer onto the porous support member and drying the obtained coating film.

Next, the specimen was placed in a metal cell, and the metal cell was sealed with an O-ring so that no leakage would occur. Next, a gas mixture was injected into the metal cell such that the gas mixture was in contact with a principal surface, on the intermediate layer side, of the specimen. The gas mixture was composed substantially of carbon dioxide and nitrogen. The concentration of carbon dioxide in the gas mixture was 50 vol% under standard conditions. The gas mixture injected into the metal cell had a temperature of 30°C and a pressure of 0.1 MPa. Next, a space, in the metal cell, that is adjacent to a principal surface, on the porous support member side, of the specimen was decompressed using a vacuum pump. This space was decompressed in such a manner that a pressure in the space was lower than an atmospheric pressure in a measurement environment by 0.1 kPa. Thus, a permeated fluid was obtained. The permeation rate T2 of carbon dioxide permeating through the intermediate layer was determined based on the composition of the obtained permeated fluid, the weight of the permeated fluid, etc.

[Evaluation on separation performance of separation membrane]

Regarding each of Examples 7, 16, 23, 24, and 26, the separation performance of the separation membrane was also evaluated. The evaluation on the separation performance of the separation membrane was conducted by the same method as that for the evaluation on the separation performance of the intermediate layer, except that the separation membrane was used instead of the laminate of the intermediate layer and the porous support member. Regarding the separation membrane, the permeation rate T1 of carbon dioxide and the separation factor α for carbon dioxide with respect to nitrogen ($CO_2/N_2$) were determined based on this evaluation.

[Table 1]

| | | | Example 1 | Example 2 | Example 3 | Example 4 | Example 5 | Example 6 | Example 7 | Example 8 | Example 9 | Example 10 | Example 11 |
|---|---|---|---|---|---|---|---|---|---|---|---|---|---|
| Intermediate layer | Composition of coating liquid (parts by weight) | KR3700 | 0 | 100 | 100 | 100 | 100 | 100 | 100 | 100 | 100 | 100 | 100 |
| | | KR3701 | 0 | 0 | 0 | 0 | 0 | 0 | 0 | 0 | 0 | 0 | 0 |
| | | KR3704 | 0 | 0 | 0 | 0 | 0 | 0 | 0 | 0 | 0 | 0 | 0 |
| | | YR3340 | 100 | 0 | 0 | 0 | 0 | 0 | 0 | 0 | 0 | 0 | 0 |
| | | Cat-PL-50T | 0 | 0.5 | 0.5 | 0.5 | 0.5 | 0.5 | 0.5 | 0.5 | 0.5 | 0.5 | 0.5 |
| | | BPO | 3 | 0 | 0 | 0 | 0 | 0 | 0 | 0 | 0 | 0 | 0 |
| | Thickness [μm] | | 1 | 5 | 5 | 5 | 5 | 5 | 2 | 2 | 2 | 2 | 2 |
| Release liner | Peelability | | Light | Light | Light | Moderate | Heavy | Heavy | Light | Light | Moderate | Heavy | Heavy |
| | Product number | | PET-75 -SBK3 | PET75 SC3 | PET-75 -SBK3 | PET-75 -SBK5 | TM0 | TM7 | PET75 SC3 | PET-75 -SBK3 | PET-75 -SBK5 | TM0 | TM7 |
| Storage elastic modulus of intermediate layer [Pa] | | | $1.31 \times 10^5$ | $0.83 \times 10^5$ | $0.83 \times 10^5$ | $0.83 \times 10^5$ | $0.83 \times 10^5$ | $0.83 \times 10^5$ | $0.83 \times 10^5$ | $0.83 \times 10^5$ | $0.83 \times 10^5$ | $0.83 \times 10^5$ | $0.83 \times 10^5$ |
| Adhesive strength A2 [N/50 mm] | | | 0.42 | 5.13 | 5.13 | 5.13 | 5.13 | 5.13 | 2.46 | 2.46 | 2.46 | 2.46 | 2.46 |
| Adhesive strength A1 [N/50 mm] | | | 0.24 | 0.13 | 0.24 | 0.53 | 1.2 | 1.7 | 0.13 | 0.24 | 0.53 | 1.2 | 1.7 |
| Ratio R (A2/A1) | | | 1.8 | 39.5 | 21.4 | 9.7 | 4.3 | 3.0 | 18.9 | 10.3 | 4.6 | 2.1 | 1.4 |
| Transfer property | | | × | ○ | ○ | ○ | Δ | × | ○ | ○ | Δ | × | × |
| Coating property of coating liquid with respect to release liner (without leveling agent) | | | ○ | Δ | ○ | ○ | ○ | ○ | Δ | ○ | ○ | ○ | ○ |
| Coating property of coating liquid with respect to release liner (with leveling agent) | | | ○ | ○ | ○ | ○ | ○ | ○ | ○ | ○ | ○ | ○ | ○ |
| $CO_2$ permeation rate T2 of intermediate layer [GPU] | | | - | - | - | - | - | - | 1775 | - | - | - | - |
| $CO_2$ permeation rate T1 of separation membrane [GPU] | | | - | - | - | - | - | - | 756 | - | - | - | - |

(continued)

| | Example 1 | Example 2 | Example 3 | Example 4 | Example 5 | Example 6 | Example 7 | Example 8 | Example 9 | Example 10 | Example 11 |
|---|---|---|---|---|---|---|---|---|---|---|---|
| $CO_2/N_2$ separation factor $\alpha$ of separation membrane [-] | - | - | - | - | - | - | 25.4 | - | - | - | - |

[Table 2]

| | | | Example 12 | Example 13 | Example 14 | Example 15 | Example 16 | Example 17 | Example 18 | Example 19 | Example 20 | Example 21 | Example 22 |
|---|---|---|---|---|---|---|---|---|---|---|---|---|---|
| Intermediate layer | Composition of coating liquid (parts by weight) | KR3700 | 100 | 100 | 100 | 100 | 70 | 70 | 70 | 70 | 70 | 0 | 100 |
| | | KR3701 | 0 | 0 | 0 | 0 | 30 | 30 | 30 | 30 | 30 | 0 | 0 |
| | | KR3704 | 0 | 0 | 0 | 0 | 0 | 0 | 0 | 0 | 0 | 100 | 0 |
| | | YR3340 | 0 | 0 | 0 | 0 | 0 | 0 | 0 | 0 | 0 | 0 | 0 |
| | | Cat-PL-50T | 0.5 | 0.5 | 0.5 | 0.5 | 0.5 | 0.5 | 0.5 | 0.5 | 0.5 | 0.5 | 0.5 |
| | | BPO | 0 | 0 | 0 | 0 | 0 | 0 | 0 | 0 | 0 | 0 | 0 |
| | | Calcium carbonate | 0 | 0 | 0 | 0 | 0 | 0 | 0 | 0 | 0 | 0 | 100 |
| | Thickness [μm] | | 1 | 1 | 1 | 1 | 2 | 2 | 2 | 2 | 2 | 2 | 2 |
| Release liner | Peelability | | Light | Moderate | Heavy | Heavy | Light | Light | Moderate | Heavy | Heavy | Light | Light |
| | Product number | | PET75 SC3 | PET-75 -SBK5 | TM0 | TM7 | PET75 SC3 | PET-75 -SBK3 | PET-75 -SBK5 | TM0 | TM7 | PET75 SC3 | PET75 SC3 |
| Storage elastic modulus of intermediate layer [Pa] | | | $0.83 \times 10^5$ | $0.83 \times 10^5$ | $0.83 \times 10^5$ | $0.83 \times 10^5$ | $0.93 \times 10^5$ | $0.93 \times 10^5$ | $0.93 \times 10^5$ | $0.93 \times 10^5$ | $0.93 \times 10^5$ | $1.12 \times 10^5$ | $1.03 \times 10^6$ |
| Adhesive strength A2 [N/50 mm] | | | 0.67 | 0.67 | 0.67 | 0.67 | 1.59 | 1.59 | 1.59 | 1.59 | 1.59 | 0.14 | 0.11 |
| Adhesive strength A1 [N/50 mm] | | | 0.13 | 0.53 | 1.2 | 1.7 | 0.13 | 0.24 | 0.53 | 1.2 | 1.7 | 0.13 | 0.13 |
| Ratio R (A2/A1) | | | 5.2 | 1.3 | 0.6 | 0.4 | 12.2 | 6.6 | 3.0 | 1.3 | 0.9 | 1.1 | 0.8 |
| Transfer property | | | ○ | × | × | × | ○ | ○ | × | × | × | × | × |
| Coating property of coating liquid with respect to release liner (without leveling agent) | | | Δ | ○ | ○ | ○ | Δ | ○ | ○ | ○ | ○ | Δ | Δ |
| Coating property of coating liquid with respect to release liner (with leveling agent) | | | ○ | ○ | ○ | ○ | ○ | ○ | ○ | ○ | ○ | ○ | ○ |
| $CO_2$ permeation rate T2 of intermediate layer [GPU] | | | - | - | - | - | 1679 | - | - | - | - | - | 8915 |

(continued)

| | Example 12 | Example 13 | Example 14 | Example 15 | Example 16 | Example 17 | Example 18 | Example 19 | Example 20 | Example 21 | Example 22 |
|---|---|---|---|---|---|---|---|---|---|---|---|
| $CO_2$ permeation rate T1 of separation membrane [GPU] | - | - | - | - | 711 | - | - | - | - | - | - |
| $CO_2/N_2$ separation factor $\alpha$ of separation membrane [-] | - | - | - | - | 24.6 | - | - | - | - | - | - |

[Table 3]

| | | | Example 23 | Example 24 | Example 25 | Example 25 | Example 27 | Example 28 |
|---|---|---|---|---|---|---|---|---|
| Intermediate layer | Composition of coating liquid (parts by weight) | KR3700 | 100 | 100 | 100 | 100 | 100 | 100 |
| | | KR3701 | 0 | 0 | 0 | 0 | 0 | 0 |
| | | KR3704 | 0 | 0 | 0 | 0 | 0 | 0 |
| | | YR3340 | 0 | 0 | 0 | 0 | 0 | 0 |
| | | Cat-PL-50T | 0.5 | 0.5 | 0.5 | 0.5 | 0.5 | 0.5 |
| | | BPO | 0 | 0 | 0 | 0 | 0 | 0 |
| | | Calcium carbonate | 0 | 0 | 0 | 0 | 0 | 0 |
| | | Zeolite 4A (< 300 nm) | 10 | 30 | 100 | 0 | 0 | 0 |
| | | Zeolite 4A (> 300 nm) | 0 | 0 | 0 | 10 | 30 | 100 |
| | Thickness [μm] | | 2 | 2 | 2 | 2 | 2 | 2 |
| Release liner | Peelability | | Light | Light | Light | Light | Light | Light |
| | Product number | | PET-75 -SC3 | PET-75 -SC3 | PET-75 -SC3 | PET-75 -SC3 | PET-75 -SC3 | PET-75 -SC3 |
| Storage elastic modulus of intermediate layer [Pa] | | | $0.84 \times 10^5$ | $0.84 \times 10^5$ | $1.39 \times 10^5$ | $0.86 \times 10^5$ | $1.04 \times 10^5$ | $1.31 \times 10^5$ |
| Adhesive strength A2 [N/50 mm] | | | 2.39 | 2.37 | 0.23 | 2.27 | 0.35 | 0.23 |
| Adhesive strength A1 [N/50 mm] | | | 0.13 | 0.13 | 0.13 | 0.13 | 0.13 | 0.13 |
| Ratio R (A2/A1) | | | 18.4 | 18.2 | 1.8 | 17.5 | 2.7 | 1.8 |
| Transfer property | | | ○ | ○ | × | ○ | × | × |
| Coating property of coating liquid with respect to release liner (without leveling agent) | | | Δ | Δ | Δ | Δ | Δ | Δ |
| Coating property of coating liquid with respect to release liner (with leveling agent) | | | ○ | ○ | ○ | ○ | ○ | ○ |
| $CO_2$ permeation rate T2 of intermediate layer [GPU] | | | 2245 | 3113 | 10452 | 2316 | 8123 | 9556 |
| $CO_2$ permeation rate T1 of separation membrane [GPU] | | | 812 | 897 | - | 857 | - | - |

(continued)

| | Example 23 | Example 24 | Example 25 | Example 25 | Example 27 | Example 28 |
|---|---|---|---|---|---|---|
| $CO_2/N_2$ separation factor α of separation membrane [-] | 25.5 | 26.5 | - | 25.8 | - | - |

Abbreviations shown in Tables 1 to 3 are as follows.

KR3700: KR-3700 (a silicone-based pressure-sensitive adhesive) available from Shin-Etsu Chemical Co., Ltd.
KR3701: KR-3701 (a silicone-based pressure-sensitive adhesive) available from Shin-Etsu Chemical Co., Ltd.
KR3704: KR-3704 (a silicone-based pressure-sensitive adhesive) available from Shin-Etsu Chemical Co., Ltd.
YR3340: YR3340 (a silicone-based pressure-sensitive adhesive) available from Momentive Performance Materials Inc.
Cat-PL-50T: Cat-PL-50T (a platinum-based catalyst) available from Shin-Etsu Chemical Co., Ltd.
BPO: Benzoyl peroxide
Calcium carbonate: Heavy calcium carbonate (particle diameter: 1 to 5 μm) available from HAYASHI KASEI CO., LTD.
Zeolite 4A (< 300 nm): Zeolite 4A (average particle diameter: 100 nm) available from Nakamura Choukou Co., Ltd.
Zeolite 4A (> 300 nm): Zeolite 4A (average particle diameter: 500 nm) available from Nakamura Choukou Co., Ltd.
PET-75-SBK3: PET-75-SBK3 (a PET film subjected to a silicone-based release treatment) available from FUJIKO Co., Ltd.
PET75SC3: PET75SC3 (a PET film subjected to a silicone-based release treatment) available from FUJIKO Co., Ltd.
PET-75-SBK5: PET-75-SBK5 (a PET film subjected to a silicone-based release treatment) available from FUJIKO Co., Ltd.
TM0: TMO (a PET film subjected to a non-silicone-based release treatment) available from NIPPA CORPORATION
TM7: TM7 (a PET film subjected to a non-silicone-based release treatment) available from NIPPA CORPORATION

FIG. 5 is a graph showing a relationship between the adhesive strength A1 and the adhesive strength A2 in Examples 1 to 22. The symbols in the graph are defined according to the following criterion.

●: The transfer property was evaluated as ○ and the coating property, with respect to the release liner, of the coating liquid containing no leveling agent was evaluated as o. o: The transfer property was evaluated as o and the coating property, with respect to the release liner, of the coating liquid containing no leveling agent was evaluated as Δ.
▲: The transfer property was evaluated as Δ and the coating property, with respect to the release liner, of the coating liquid containing no leveling agent was evaluated as o. ×: The transfer property was evaluated as ×.

As can be seen from Tables 1 to 3 and FIG. 5, in Examples 2 to 5, 7 to 9, 12, 16, 17, 23, 24, and 26 in which the ratio R of the adhesive strength A2 between the intermediate layer and the porous support member with respect to the adhesive strength A1 between the release liner and the separation functional layer was 3.1 or more, the separation functional layer and the intermediate layer were able to be transferred from the release liner to the porous support member more easily than in the other Examples. Particularly, in each of Examples 2, 3, 7, 8, 12, 16, 17, 23, 24, and 26 in which the storage elastic modulus of the intermediate layer was $1.0 \times 10^5$ Pa or less and the peelability of the release liner was evaluated as "light", the evaluation result of the transfer property was "o", which was an excellent result.
As can be seen from the results of Examples 7, 16, 23, 24, and 26, the addition of the filler to the intermediate layer made it possible for the separation membrane to have an improved permeation rate T1 of the acid gas while maintaining the separation factor α.

INDUSTRIAL APPLICABILITY

The separation membrane of the present embodiment is suitable for separating an acid gas from a gas mixture containing the acid gas. In particular, the separation membrane of the present embodiment is suitable for separating carbon dioxide from an off-gas of a chemical plant or a thermal power plant.

## Claims

**1.** A method for manufacturing a separation membrane including a separation functional layer, a porous support member supporting the separation functional layer, and an intermediate layer disposed between the separation functional layer and the porous support member, the method comprising:

applying a coating liquid containing a material of the intermediate layer onto a first laminate having a release liner and the separation functional layer, then drying the coating liquid, and thereby forming the intermediate layer;
bonding the intermediate layer of a second laminate having the release liner, the separation functional layer, and the intermediate layer in this order to the porous support member and thereby forming a third laminate; and

removing the release liner from the third laminate, wherein
the intermediate layer is formed in such a manner that a ratio R of an adhesive strength A2 (N/50 mm) between the intermediate layer and the porous support member with respect to an adhesive strength A1 (N/50 mm) between the release liner and the separation functional layer is 3.1 or more.

**2.** The manufacturing method according to claim 1, wherein the intermediate layer has a storage elastic modulus of $1.0 \times 10^5$ Pa or less at 25°C.

**3.** The manufacturing method according to claim 1 or 2, wherein the ratio R is 5.0 or more.

**4.** The manufacturing method according to any one of claims 1 to 3, wherein the adhesive strength A1 is 0.2 to 1.8 N/50 mm.

**5.** The manufacturing method according to any one of claims 1 to 4, wherein the coating liquid is a pressure-sensitive adhesive composition.

**6.** The manufacturing method according to claim 5, wherein the pressure-sensitive adhesive composition includes a silicone-based polymer.

**7.** The manufacturing method according to any one of claims 1 to 6, wherein the intermediate layer includes a filler.

**8.** The manufacturing method according to claim 7, wherein a thickness E (μm) of the intermediate layer and an average particle diameter D (μm) of the filler satisfy a relational expression (I) below.

$$E > 4 \times D \qquad (I)$$

**9.** The manufacturing method according to any one of claims 1 to 8, wherein the separation functional layer includes a polyimide resin.

**10.** The manufacturing method according to any one of claims 1 to 9, wherein the release liner is a polyethylene terephthalate film subjected to a release treatment.

**11.** The manufacturing method according to any one of claims 1 to 10, wherein the porous support member includes at least one selected from the group consisting of polyvinylidene fluoride and polysulfone.

**12.** A separation membrane comprising:

a separation functional layer;
a porous support member supporting the separation functional layer; and
an intermediate layer disposed between the separation functional layer and the porous support member, wherein the intermediate layer has a storage elastic modulus of $1.0 \times 10^5$ Pa or less at 25°C.

**13.** The separation membrane according to claim 12, wherein the storage elastic modulus is $0.1 \times 10^5$ Pa or more.

**14.** The separation membrane according to claim 12 or 13, wherein the intermediate layer is formed from a pressure-sensitive adhesive composition.

**15.** The separation membrane according to claim 14, wherein the pressure-sensitive adhesive composition includes a silicone-based polymer.

**16.** The separation membrane according to any one of claims 12 to 15, wherein the intermediate layer includes a filler.

**17.** The separation membrane according to claim 16, wherein a thickness E (μm) of the intermediate layer and an average particle diameter D (μm) of the filler satisfy a relational expression (I) below.

$$E > 4 \times D \qquad (I)$$

**18.** The separation membrane according to any one of claims 12 to 17, wherein the separation functional layer includes a polyimide resin.

**19.** The separation membrane according to any one of claims 12 to 18, wherein the porous support member includes at least one selected from the group consisting of polyvinylidene fluoride and polysulfone.

**20.** The separation membrane according to any one of claims 12 to 19, wherein the separation membrane is used for separating carbon dioxide from a gas mixture containing carbon dioxide and nitrogen.

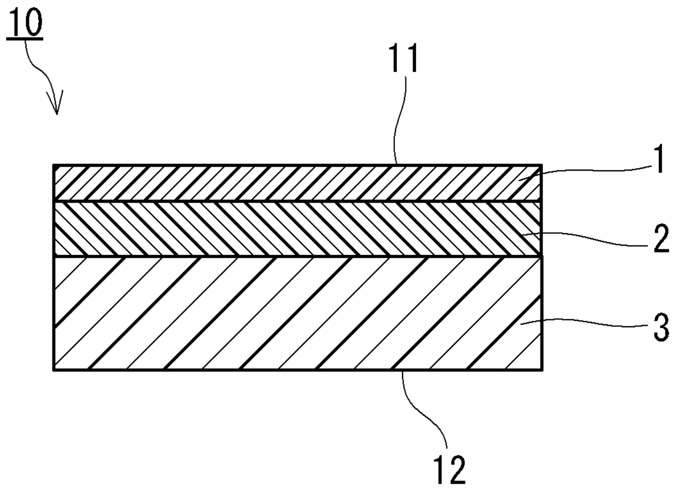


FIG.1

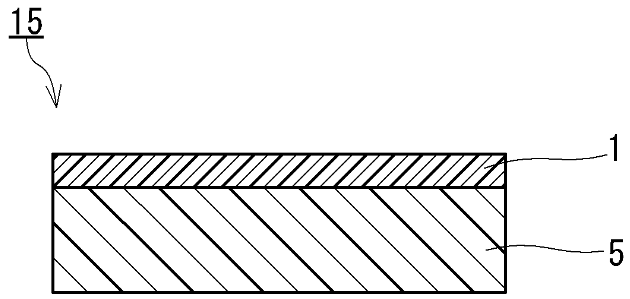


FIG.2A

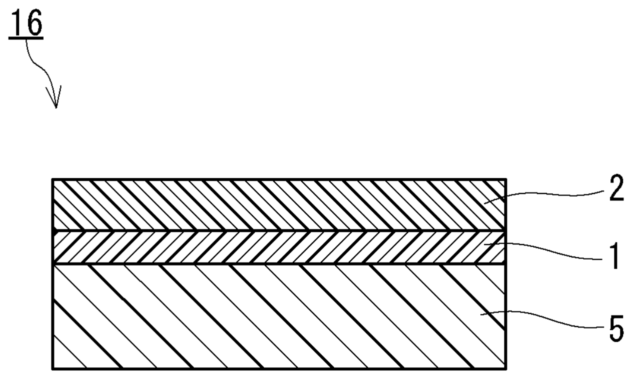


FIG.2B

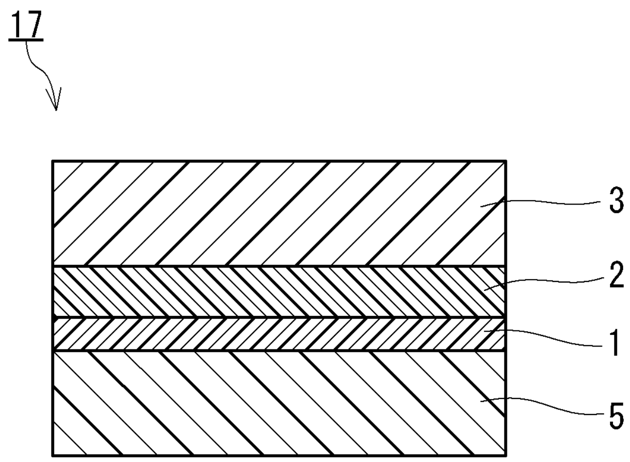


FIG.2C

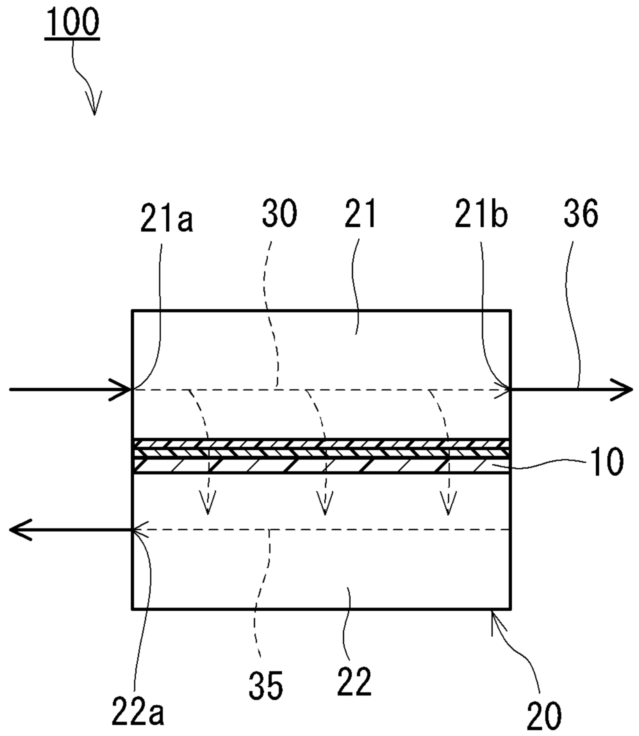


FIG.3

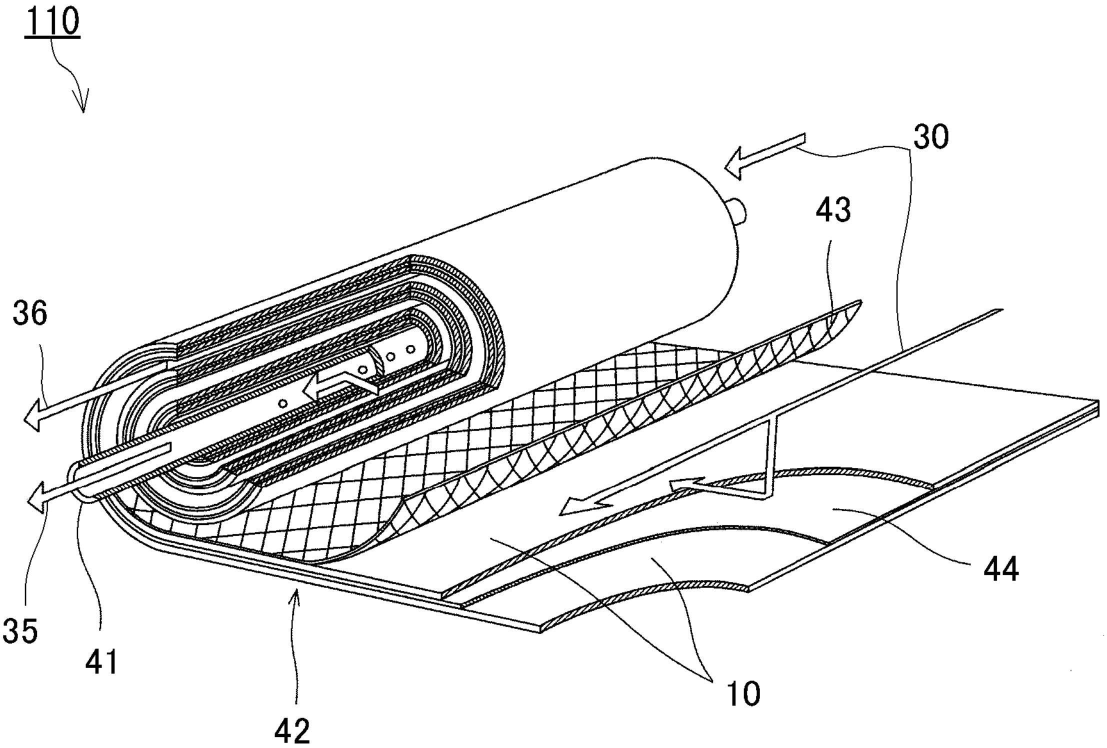


FIG.4

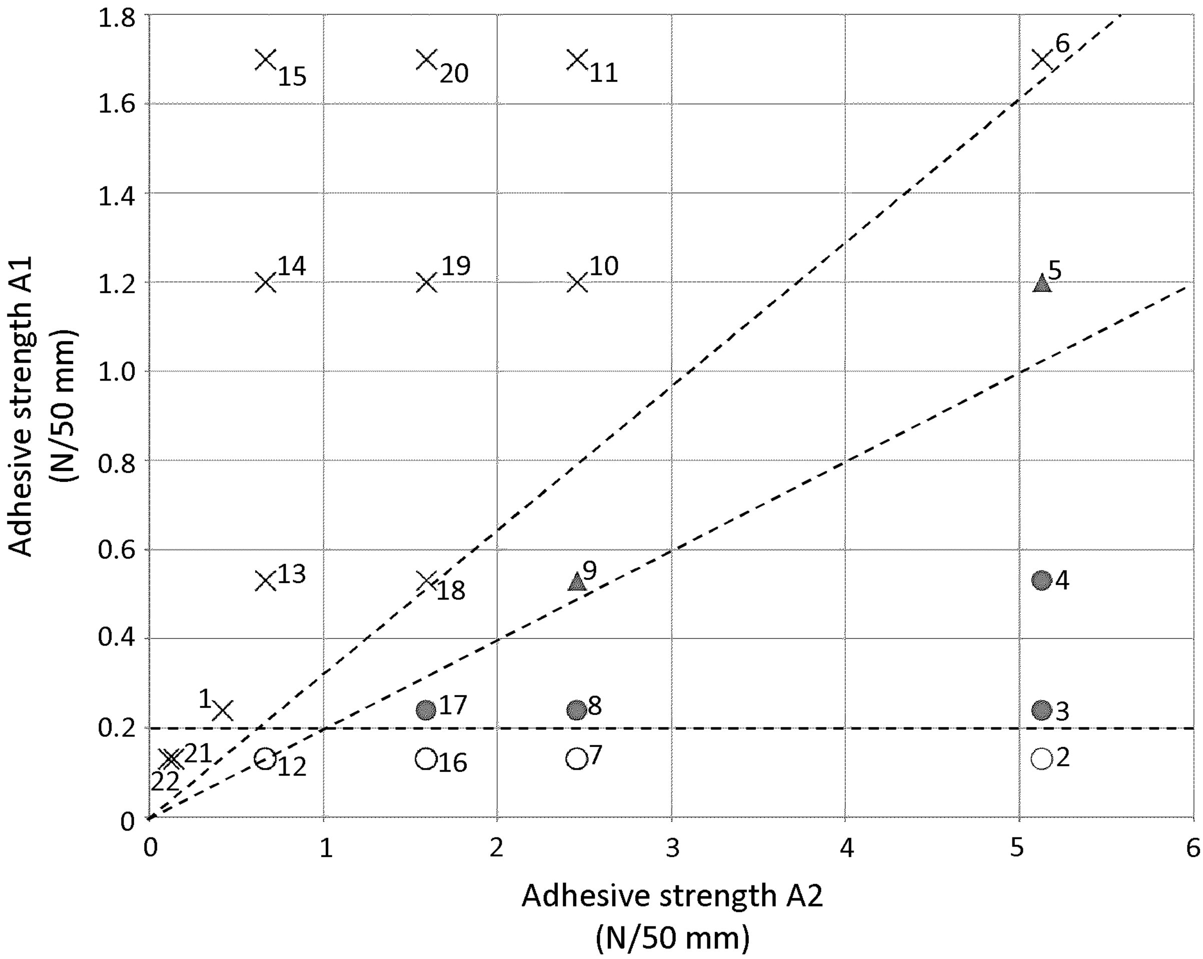
Adhesive strength A1
(N/50 mm)
Adhesive strength A2
(N/50 mm)
1.8
1.6
1.4
1.2
1.0
0.8
0.6
0.4
0.2
0
0
1
2
3
4
5
6
15
20
11
6
14
19
10
5
13
18
9
4
1
17
8
3
21
22
12
16
7
2

FIG.5

## INTERNATIONAL SEARCH REPORT

International application No.
**PCT/JP2022/008061**

**A. CLASSIFICATION OF SUBJECT MATTER**

***B01D 67/00***(2006.01)i; ***B01D 69/10***(2006.01)i; ***B01D 69/12***(2006.01)i; ***B01D 71/34***(2006.01)i; ***B01D 71/64***(2006.01)i; ***B01D 71/68***(2006.01)i; ***B32B 37/02***(2006.01)i
FI: B01D67/00; B01D69/12; B01D69/10; B01D71/64; B01D71/34; B01D71/68; B32B37/02

According to International Patent Classification (IPC) or to both national classification and IPC

**B. FIELDS SEARCHED**

Minimum documentation searched (classification system followed by classification symbols)

B01D67/00; B01D69/10; B01D69/12; B01D71/34; B01D71/64; B01D71/68; B32B37/02

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 2016/178323 A1 (NITTO DENKO CORPORATION) 10 November 2016 (2016-11-10) | 1-20 |
| A | WO 2016/178324 A1 (NITTO DENKO CORPORATION) 10 November 2016 (2016-11-10) | 1-20 |
| A | JP 2019-089034 A (SUMITOMO CHEMICAL CO) 13 June 2019 (2019-06-13) | 1-20 |
| A | JP 2020-163375 A (NITTO DENKO CORPORATION) 08 October 2020 (2020-10-08) | 1-20 |
| A | JP 2019-501010 A (EXXONMOBIL RESEARCH AND ENGINEERING COMPANY) 17 January 2019 (2019-01-17) | 1-20 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **01 April 2022** | **19 April 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2022/008061**

| Patent document cited in search report | Publication date (day/month/year) | Patent family member(s) | Publication date (day/month/year) |
|---|---|---|---|
| WO 2016/178323 A1 | 10 November 2016 | US 2018/0147522 A1 | |
| | | EP 3275531 A1 | |
| | | CN 107530647 A | |
| | | KR 10-2018-0002675 A | |
| | | TW 201707765 A | |
| WO 2016/178324 A1 | 10 November 2016 | US 2018/0104637 A1 | |
| | | EP 3292906 A1 | |
| | | CN 107530646 A | |
| | | KR 10-2018-0002673 A | |
| | | TW 201707766 A | |
| JP 2019-089034 A | 13 June 2019 | US 2021/0001280 A1 | |
| | | EP 3711845 A1 | |
| | | CN 111356517 A | |
| JP 2020-163375 A | 08 October 2020 | (Family: none) | |
| JP 2019-501010 A | 17 January 2019 | US 2017/0136420 A1 | |
| | | EP 3374056 A1 | |
| | | TW 201733967 A | |
| | | CN 108290110 A | |
| | | KR 10-2018-0081127 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2014184424 A
- JP 2014024004 A


### Non-patent literature cited in the description


- **E. KAMIO et al.** *Adv.Mater,* 2017, vol. 29, 1704118